# EUROPÄISCHE PATENTSCHRIFT

(11) **EP 2 015 163 B1**
(45) Veröffentlichungstag und Bekanntmachung des Hinweises auf die Patenterteilung: **24.04.2013**
(21) Anmeldenummer: 08009902.1
(22) Anmeldetag: 30.05.2008
(51) Int. Cl.: G06F 3/023, G06F 3/048

(54) **Verfahren zur Übergabe von Zeichen und Vorrichtung zum Ausüben solchen Verfahrens**
Method for transferring characters and device for executing such a method
Procédé de transmission de signaux et dispositif d'exécution d'un tel procédé

(30) Priorität: 05.06.2007 DE 102007026181
(43) Veröffentlichungstag der Anmeldung: 14.01.2009
(73) Patentinhaber: Wergen, Gerhard, 90513 Zirndorf (DE)
(72) Erfinder: Wergen, Gerhard, 90513 Zirndorf (DE)
(74) Vertreter: Söltenfuss, Dirk Christian

(56) Entgegenhaltungen:
- EP-A- 1 168 147
- EP-A- 1 748 388
- WO-A-00/23870
- US-A- 6 046 732
- US-A1- 2002 063 687
- US-A1- 2003 001 821
- US-A1- 2005 140 650

## Beschreibung

Die Erfindung betrifft ein Verfahren und eine Vorrichtung zum Eingeben von Zeichen gemäß dem Oberbegriff des Anspruches 1 bzw. 8.

Diese Maßnahmen sind zum Beispiel aus der DE 198 49 515 C1 (= EP 1 042 713 B1 = US 6,580,414) und der EP 1 168 147 A2 bekannt. Sie beruhen darauf, mittels eines auch als Joystick bezeichneten Steuerknüppels, der aus seiner Ruhestellung heraus in jeweils eine von acht möglichen Richtungen belastet werden kann, ein Zeichen aus einem Zeichenvorrat auszuwählen, der in einer 9x9-Main-Matrix darstellbar ist. Die ist dafür unterteilt in 3x3-Sub-Matrizen, die jede ihrerseits aus 3x3 Zeichenfeldern gruppiert ist. Einerseits die Main-Matrix und andererseits jede der Sub-Matrizen weisen je ein zeichenneutrales Zentral- oder Mittelfeld als Startfeld für einen Sprung zunächst vom Main-Mittelfeld in das Sub-Mittelfeld einer der umgebenden Sub-Matrizen und von letzterem in eines der dieses umgebenden Zeichenfelder dieser Sub-Matrix auf; mit Ausgabe des so in zwei Schritten angewählten Zeichens bei Rücksprung direkt in das Main-Mittelfeld.

Die jeweilige Sprungrichtung des aktuellen Auswahl- oder Eingabeschrittes wird durch die Richtung der Belastung des Steuerknüppels in Richtung einer der zueinander Orthogonalen eines kartesischen Koordinatenkreuzes oder längs einer der Winkelhalbierenden zwischen diesen Orthogonalen bestimmt. Für jeden Auswahlsprung genügt ein kurzer Schlag in der gewünschten Richtung gegen den Steuerknüppel. Es ist aber auch möglich, den Steuerknüppel fortlaufend zu belasten, ihn also gewissermaßen über die Zwischenposition des Sub-Mittelfeldes hinweg bis in das dort angestrebte Zeichenfeld hinein zu ziehen. Mit dem Loslassen wird dann ein direkter Rücksprung in das Main-Mittelfeld bewirkt, und zugleich die Zeichenausgabe an die Hardware, an die der Steuerknüppel angeschlossen ist. Deren Computer liefert die aufeinander folgende Darstellung der nacheinander aus den Sub-Matrizen ausgewählten Zeichen auf einem Display zur Anzeige der mittels des Steuerknüppels - anstelle über eine herkömmliche Tastatur - eingegebenen Zeichenfolge, oder die im Zeichenfeld angewählte Funktion wird ausgeführt.

Für diese Zeichenauswahl ist es demzufolge erforderlich, mittels des Steuerknüppels die vier zueinander orthogonalen Richtungen eines kartesischen Koordinatenkreuzes und die Richtungen der vier Winkelhalbierenden zwischen ihnen selektiv einschlagen zu können. Auf den Diagonalen liegen die Sub-Matrizen der Felder mit den seltener benötigten Zeichen und Sonderzeichen sowie Funktionen. Mit einer Aufeinanderfolge von zwei richtungsorientierten Sprüngen lassen sich so alle über die Zeichenfelder der Sub-Matrizen verteilten Buchstaben des Alphabetes und alle gebräuchlichen Sonderzeichen und Funktionen nacheinander anwählen.

Wenn eine Eingabe-Schrittfolge nicht vollständig bis zu einem Zeichenfeld zu Ende geführt wurde, erfolgt nach einer voreingestellten Wartezeit der Rücksprung in das Main-Mittelfeld ohne Zeichenausgabe. Bei Verharren in einem Zeichenfeld erfolgt, nach einer voreingestellten Wartezeit, eine ständige Wiederholung der Ausgabe dieses Zeichens, wie es von der herkömmlichen Tastatur geläufig ist.

Zumal bei Einsatz so genannter weglos arbeitender Steuerknüppel, die statt auf eine dezidierte Auslenkung schon auf die Richtung einer Druckausübung ansprechen, hat dieses Eingabesystem sich insbesondere für die Belange von Personen bewährt, die etwa unter Muskelschwäche oder gar einer motorischen Behinderung wie Multipler Sklerose oder Spastischer Lähmung leiden und deshalb weder gezielt eine Tastatur bedienen noch auch nur gezielte Arbeitsbewegungen ausüben können, die aber durchaus in der Lage sind, einen richtungsselektiven Schlag in einer bestimmten Richtung reproduzierbar abzugeben. Andererseits haben arbeitswissenschaftliche Testreihen mit unbeeinträchtigten Personen schon nach kurzzeitiger Eingewöhnung an diese Achtrichtungs-Steuerknüppeleingabe blindschreibend Geschwindigkeiten von 160 Zeichen pro Minute über längere Zeitspannen hinweg erreichen lassen.

Damit erscheint das gattungsbildende Verfahren besonders prädestiniert zum Einsatz dort, wo aus Platzmangel nur sehr kleine oder kompliziert zu handhabende da vielfach belegte Tastaturen Raum haben, die insbesondere, selbst unter Einsatz der T9-Autokorrektur, nur umständlich und fehleranfällig für Texteingaben zu bedienen sind; wie es insbesondere bei Mobiltelefonen, bei Navigationsgeräten oder bei Handheld-Computern anzutreffen ist. Deren richtungsabhängig betätigbaren Eingabemöglichkeiten mittels (vierer Cursor-) Tasten, einer Rollkugel oder Tastwippen bzw. Schwenknippeln sind aber, zum Vermeiden von Fehlbetätigungen angesichts ihrer minimalen Abmessungen, generell nur für vier zueinander orthogonale Auswahlbewegungen eingerichtet. Wegen Unerreichbarkeit der auf den Winkelhalbierenden liegenden Sub-Matrizen mit nur einem Sprung und deren Diagonalfelder überhaupt kann damit die oben beschriebene Zeichenauswahl deshalb nicht mit dem für die Belange der Praxis erforderlichen Zeichenvorrat realisiert werden, zumal wenn die Steuerknüppel-Eingabe gemäß den eingangs genannten Schutzrechten die herkömmliche Tastatur-Eingabe voll ersetzen soll.

Ferner offenbart die US 2002/0063687 A1 eine Vorrichtung zum Eingeben von Zeichen aus einem Zeichenvorrat mit zwei Fünfrichtungs-Schaltern, einer Modustaste und einem Display, bei welcher zunächst mittels der Modustaste ein bestimmter von mehreren zur Verfügung stehenden Zeichenvorräten vorausgewählt werden kann, der dann auf dem Display in einer Matrixdarstellung angezeigt wird, und dann mit dem ersten Fünfrichtungs-Schalter eine Sub-Matrix aus der Main-Matrix und mit Hilfe des zweiten Fünfrichtungs-Schalters ein Zeichenfeld aus der angewählten Sub-Matrix ausgewählt wird.

Die US 6,046,732 A zeigt ein Mobiltelefon mit einem Display und einem Tastenfeld, wobei in dem Display eine dreizeilige Darstellung der über das Tastenfeld anwählbaren Zeichen angeboten wird, die der Benutzer dann mittels einer Vierrichtungs-Cursortaste und einer Okay-Taste hervorheben und auswählen kann.

Aus der US 2005/0140650 A1 ist eine Vorrichtung zum Eingeben von Zeichen bekannt, bei welcher der Zeichenvorrat in Form einer Matrixdarstellung einer Main-Matrix aus vier Sub-Matrizen, die wiederum aus vier Sub-Sub-Matrizen aus jeweils vier Zeichenfelder aufgebaut sind, bereitgestellt wird und ein Zeichen mit Hilfe eines Vierrichtungs-Schalters in jeweils drei Betätigungsschritten ausgewählt werden kann.

Die US 2003/0001821 A1 offenbart eine Vorrichtung zum Eingeben von Zeichen mit Hilfe eines Vierrichtungs-Schalters und einer Umschalttaste, bei welcher anstelle einer konkreten Zeichenauswahl aus einer angewählten Sub-Matrix eine automatische Texterkennung zum Einsatz kommt.

Der vorliegenden Erfindung liegt die Aufgabe zugrunde, ein verbessertes Verfahren und eine verbesserte Vorrichtung zum Eingeben von Zeichen zu schaffen, bei welchen die Zeicheneingabe nach dem Prinzip der Auswahl aus einer Neunermatrix auch mit reinen Orthogonal- oder Vierrichtungs-Schaltsystemen ermöglicht wird.

Diese Aufgabe wird gelöst durch ein Verfahren zum Eingeben von Zeichen mit den Merkmalen des Anspruches 1 bzw. eine Vorrichtung zum Eingeben von Zeichen mit den Merkmalen des Anspruches 8.

Danach ist zusätzlich zu einem Vierrichtungs- Schalter, als Ersatz für die bisherige Diagonalfunktion wenigstens eine Umschalt- oder nachstehend so genannte Turn-Taste vorgesehen.

Um dafür keinen gesonderten Schalter beistellen zu müssen, kann mit deren Funktion eine ohnehin vorhandene Taste einer gerätetechnisch gegebenen Tastatur belegt werden, etwa eine der auf einem Mobiltelefon frei verfügbaren Funktionstasten oder wegen guter intuitiver Erreichbarkeit zweckmäßiger noch die unter dem Vierrichtungs-Schalter gelegene Taste "2" und/ oder die bei der Texteingabe gewöhnlich als Shift-Taste zu betätigende "#"- Taste unten rechts in der Telefontastatur.

In letzterem Falle ist zweckmäßigerweise vorgesehen, dass die erstmalige Betätigung der "#"-Taste die herkömmliche Shift-Funktion des Umschaltens der Ausgabe zwischen großen und kleinen Buchstaben auslöst, während erst eine Zweitbetätigung die Turn-Funktion aktiviert. Bei dritter Betätigung sind die Shift- und die Turn-Funktionen gleichzeitig aktiv, und mit der vierten Betätigung erfolgt die Rückkehr in die Ausgangssituation.

Die Betätigung der Turn-Taste vor Absprung vom Main-Mittelfeld hat erfindungsgemäß ein funktionales Verschwenken der Auswahlrichtung um 45° (vorzugsweise gegen den Uhrzeigersinn, also nach links) für den daraufhin folgenden Sprung in eine der Sub-Matrizen zur Folge. Das bedeutet, dass dann beispielsweise eine Auswahlbetätigung am Vierrichtungs-Schalter "nach oben" vom Mittelfeld der Main-Matrix tatsächlich nicht zu einem Sprung in die auf der Vertikalen darüber gelegene Sub-Matrix, sondern zu einem Sprung in die Sub-Matrix auf der nach oben links orientierten Diagonalen führt. Gleichbedeutend mit diesem Verschwenken der Auswahlrichtung durch die Turn-Taste ist ein Verdrehen aller Sub-Matrizen innerhalb der Main-Matrix um 45° um das Main-Mittelfeld herum bzw. ein Verdrehen aller Zeichenfelder innerhalb einer Sub-Matrix um 45° um deren Mittelfeld herum.

Dasselbe gilt für die Eckenlage der Zeichenfelder einer Sub-Matrix, wenn bei Erreichen ihres Mittelfeldes die Matrix-Turn-Taste oder eine gesonderte Zeichen-Turn-Taste betätigt wird.

Das Verschwenken der Auswahlwirkung des Vierrichtungs-Schalters um das Mittelfeld der Main-Matrix und um das Mittelfeld der angewählten Sub-Matrix werden wieder rückgängig gemacht, indem der Vierrichtungs-Schalter nach erreichter Zeichen- bzw. Funktionsauswahl entlastet wird und dadurch, unter Ausgabe bzw. Ausführung der Anwahl, wieder in seine neutrale Ruhelage zurückkehrt, die dem Main-Mittelfeld entspricht.

Als die richtungsabhängig betätigbaren Eingabemöglichkeiten eines Vierrichtungs-Schalters können gleichermaßen (die vier Cursor-) Tasten bzw. entsprechende Tastwippen, eine Rollkugel, eine Maus, eine Bewegung auf einem Touch-Screen oder zu Schwenknippeln verkürzte Steuerknüppel bzw. solche Joysticks selbst dienen. Insoweit nicht ohnehin apparativ bedingt nur eine Vierrichtungs-Eingabe möglich ist (wie im Falle der Cursor-Tasten), erfolgt eine signalverarbeitungstechnische Aufbereitung dahingehend, dass nur zueinander orthogonale Bewegungskomponenten verarbeitet werden, auch wenn z.B. eine Maus oder eine Rollkugel nicht exakt nur in zueinander orthogonalen Richtungen bewegt wird. In diesem Sinne kann gemäß einer zweckmäßigen Weiterbildung zur vorliegenden Erfindung auch vorgesehen sein, das in einem so genannten Fotohandy vorhandene optische System zur Eingabe zu benutzen; nämlich indem dessen Objektiv gegen eine beliebige gemusterte Vorlage gerichtet und verschoben wird, mit bildverarbeitungstechnischer Auswertung der Verschieberichtung.

Die Zeichen-Ausgabe an ein Daten (also die Zeichenfolge) verarbeitendes Gerät, auch etwa zur Maschinensteuerung, kann über eine Kabel- oder eine drahtlose Verbindung erfolgen, wenn ein geeigneter Vierrichtungs-Schalter nicht schon in das betreffende Gerät integriert ist, wie im Falle eines Mobiltelefons oder mancher Gerätesteuerung.

Zur näheren Erläuterung der erfindungsgemäßen Lösung und zweckmäßiger Weiterbildungen wird außer auf die weiteren Ansprüche, auch hinsichtlich deren Vorteilen, auf nachstehende Beschreibung eines anhand der Skizzen in der Zeichnung dargestellten praktischen Bedienungsbeispieles verwiesen. In der Zeichnung zeigen:

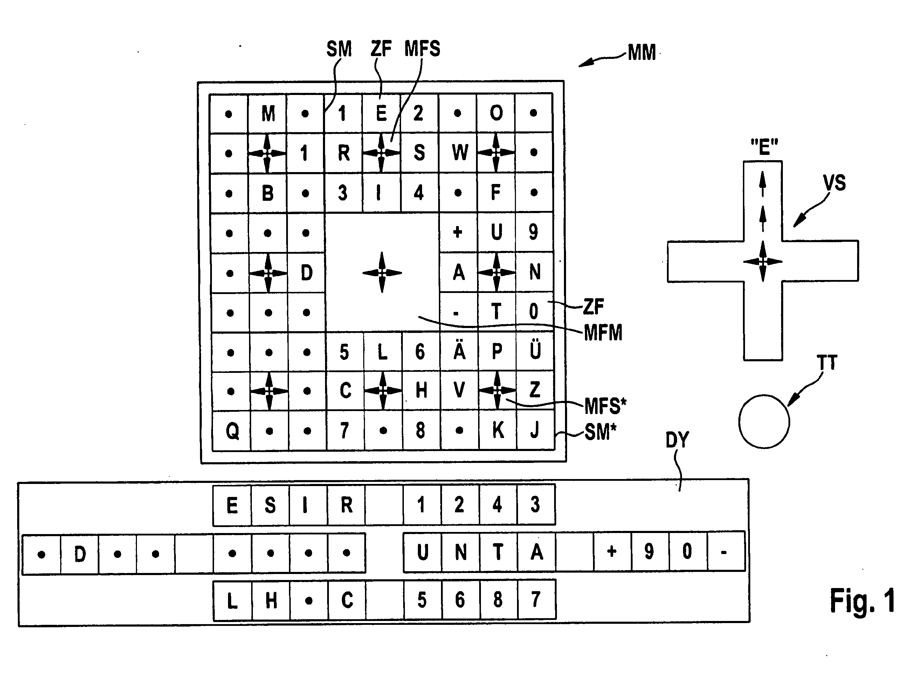

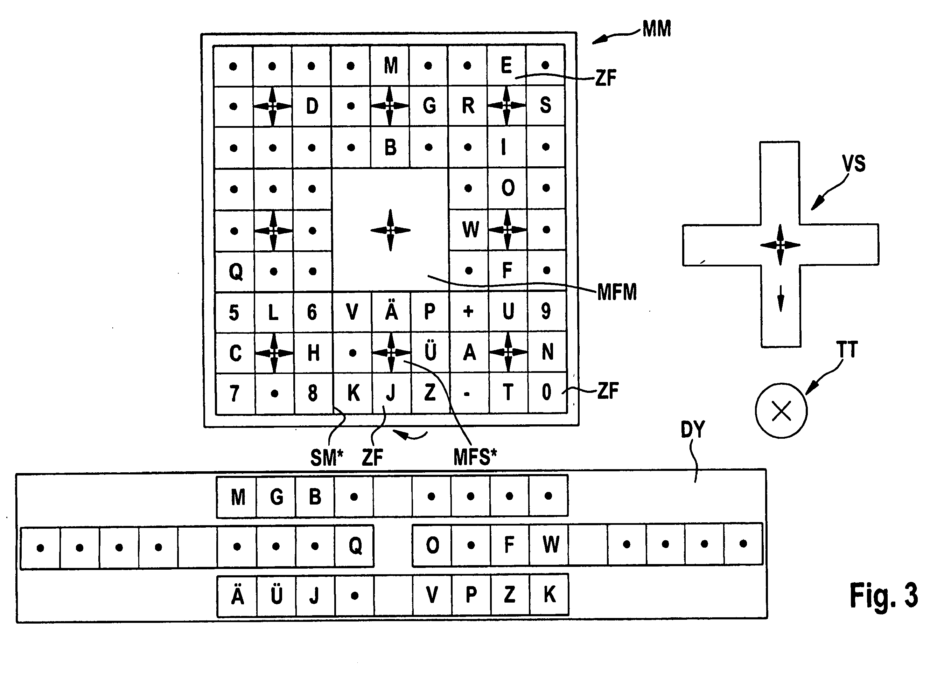

- Fig. 1: in ihrer Ausgangsformation die Main-Matrix gemäß Fig. 3 der DE 198 49 515 C1, aber hier bei Eintragung nur eines Teils der Zeichen der in ihren Sub-Matrizen anwählbaren Zeichenfelder, sowie darunter in dreizeiliger Anordnung die mittels eines Vierrichtungs-Schalters in den Sub-Matrizen unmittelbar anwählbaren Zeichenfelder und jeweils daneben die nach Verdrehen der Zeichenfelder in ihren Sub-Matrizen anwählbaren Zeichenfelder;

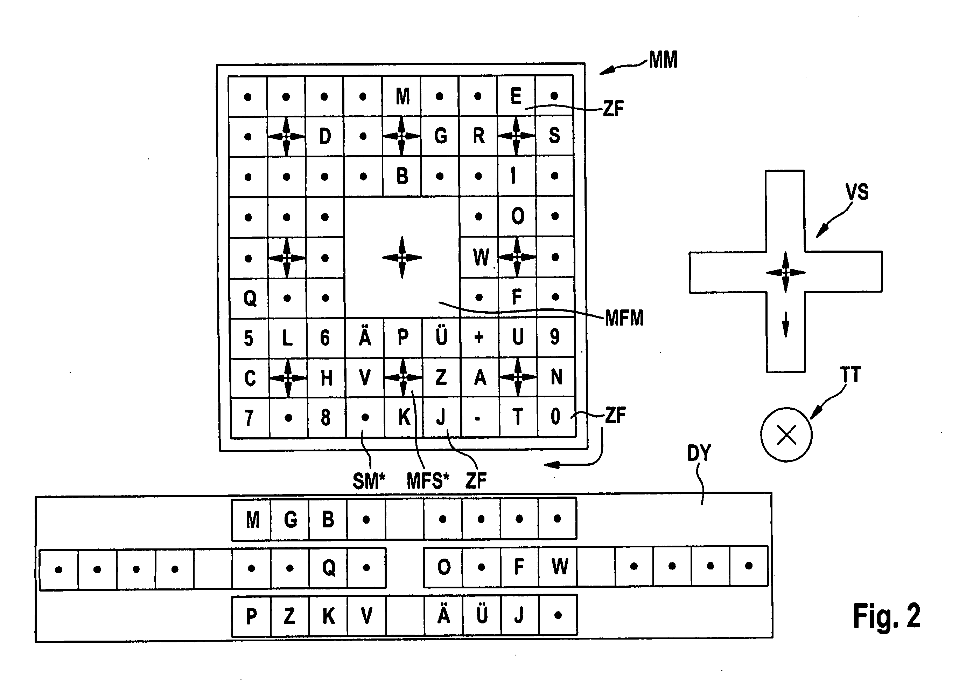

- Fig. 2: die Zeichenfelder nach Fig.1 bei gegenüber der dortigen Ausgangsformation um 45° verdrehter Lage der Sub-Matrizen innerhalb ihrer Main-Matrix, sowie darunter die nun mittels des Vierrichtungs-Schalters unmittelbar anwählbaren Zeichenfelder und jeweils daneben die nach deren Verdrehen in ihren Sub-Matrizen anwählbaren Zeichenfelder und
- Fig. 3: in der momentan angesteuerten unteren Sub-Matrix gemäß Fig. 2 deren gegenüber der Ausgangsformation in dieser Sub-Matrix um 45° verdrehte Lage der Zeichenfelder, sowie darunter in der dreizeiligen Darstellung gemäß Fig. 2 in der untersten Zeile die hier nun anwählbaren Zeichenfelder sowie rechts daneben die nach Rückkehr in die Ausgangsformation dieser Sub-Matrix gemäß Fig. 2 wieder anwählbaren Zeichenfelder.

Die in ihrer Ausgangsformation skizzierte Main-Matrix MM gemäß Fig. 1 ist identisch mit derjenigen aus der DE 198 49 515 C1; wobei aber nun zur Erleichterung der Übersicht lediglich diejenigen Zeichenfelder ZF der Sub-Matrizen SM beschriftet sind, die dem Generieren von Buchstaben und Zahlen zugeordnet sind, während für die übrigen anwählbaren (Sonder-)Zeichen und Funktionen einfach je ein Punkt als Platzhalter in die Zeichenfelder ZF eingetragen ist.

Die Zeichenfelder ZF sind jeweils zu acht um die Mittelfelder MFS der einzelnen Sub-Matrizen SM herum zu quadratischen 3x3-Sub-Matrizen SM gruppiert. In gleicher Art sind acht Sub-Matrizen SM um das für die Ansteuerung als Startfeld fungierende Mittelfeld MFM der quadratischen 3x3-Main-Matrix herum gruppiert.

Der Auswahl einer Sub-Matrix SM vom Main-Mittelfeld MFM her und danach der Auswahl eines Zeichenfeldes ZF dieser Sub-Matrix SM von ihrem Mittelfeld MFS her dient - entgegen der in acht Richtungen gegebenen Auswahlmöglichkeiten nach dem vorgenannten, gattungsbildenden Patent - nun ein Vierrichtungs-Schalter VS, der zur Veranschaulichung in der Zeichnung einheitlich als gekreuzte Anordnung von Tastwippen skizziert ist. Von jedem der Mittelfelder MF (MFM oder MFS) aus kann mittels des Vierrichtungs-Schalters VS eine Auswahlbewegung nach links, nach rechts, nach oben oder nach unten erfolgen, wie durch die gleichschenkligen Pfeilkreuze in den Mittelfeldern MF und auf dem Vierrichtungs-Schalter VS angedeutet.

Das jeweils gerade angesteuerte Feld insgesamt, oder eine kleine Lichtquelle darin, leuchtet auf, wenn die Zeichenfelder ZF zur Bedienungserleichterung ansteuerungsabhängig selektiv hinterleuchtet sind. So kann mittels springender Lichtpunkte der durch den Vierrichtungs-Schalter VS erfolgende zweistufige Auswahlvorgang zunächst vom Main-Mittelfeld MFM her in eines der Sub-Mittelfelder MFS hinein und daraufhin von diesem Sub-Mittelfeld MFS her in eines der Zeichenfelder ZF dieser ausgewählten Sub-Matrix SM hinein beobachtet werden. Dieses Manövrieren von der Main-Matrix MM zu einer der Sub-Matrizen SM und in dieser dann zu einem ihrer Zeichenfelder ZF hin kann aber auch auf einem Display, etwa nach Art einer herkömmlichen Mauszeiger- oder Cursor-Bewegung, dargeboten werden.

Um in der Ausgangsformation gemäß Fig. 1 beispielsweise das Zeichen "E" auszuwählen, wird der Vierrichtungs-Schalter VS aus seiner Ruhelage gemäß dem Main-Mittelfeld MFM heraus etwa mittels eines kurzen Schlages nach oben gedrückt, womit vom Main-Mittelfeld MFM als dem Startfeld aus die Vorauswahl der in der Main-Matrix MM darüber gelegenen Sub-Matrix SM erfolgt. Darin folgt sodann die Auswahl des Zeichens "E", indem in gleicher Weise ein kurzer Schlag in derselben Richtung wiederholt wird. Mit der Entlastung des Vierrichtungs-Schalters VS bei Erreichen des ausgewählten Zeichenfeldes ZF erfolgt ein selbsttätiger Rücksprung direkt in das Main-Mittelfeld MFM, unter Ausgabe des angewählten Zeichens "E" an eine angeschlossene Hardware (nicht dargestellt), um dieses ausgewählte Zeichen etwa in eine Datei einzuspeichern oder mittels eines Druckers oder über ein Display auszugeben.

Statt der Schläge kann auch ein kontinuierlicher Druck in der für die Zeichenauswahl erforderlichen Richtungsfolge auf den Vierrichtungs-Schalter VS ausgeübt werden. Wenn dieser manuelle Druck bei Erreichen des ausgewählten Zeichenfeldes zunächst noch aufrechterhalten bleibt, wird das dort ausgewählte Zeichen nach einer voreingestellten Reaktionszeit wiederholt ausgegeben, hier also "EEEE...", wie es von der herkömmlichen Tastatur geläufig ist.

Die auf den Winkelhalbierenden zwischen den horizontalen und vertikalen Achsen, und damit vom Main-Mittelfeld MFM aus betrachtet zu den Ecken der Main-Matrix MM hin, gelegenen Sub-Mittelfelder MFS sind mittels dieser auf vier zueinander orthogonale Richtungen beschränkten Eingabemöglichkeit jedoch nicht unmittelbar in einem Sprung erreichbar, sondern nur über den Umweg der Aufeinanderfolge zweier zueinander orthogonaler Belastungen des Vierrichtungs-Schalters VS. Und die auf den Winkelhalbierenden, also in den Ecken der Sub-Matrizen SM gelegenen Zeichenfelder ZF sind von den Sub-Mittelfeldem MFS aus gar nicht mit einem Vierrichtungsschalter VS erreichbar.

Deshalb ist wenigstens eine Turn-Taste TT vorgesehen, mittels derer bedarfsweise - vorzugsweise jeweils im Uhrzeigersinn - eine Verlagerung zunächst aller Sub-Matrizen SM innerhalb der Main-Matrix MM um 45° um das Main-Mittelfeld MFM herum bewirkt wird; und danach bedarfsweise auch noch ein gleichartiges Verdrehen der Anordnung der Zeichenfelder ZF innerhalb einer auf ihrem Mittelfeld MFS angewählten Sub-Matrix SM um 45° um dieses Sub-Mittelfeld MFS herum. Es erfolgt also bevorzugt die Verdrehung der Zeichenfelder nicht pauschal in allen Sub-Matrizen SM, sondern aus Aufwandsgründen nur in derjenigen Sub-Matrix SM*, die zur Auswahl eines bestimmten ihrer Zeichen gerade über ihr Mittelfeld MFS* (in Fig.2 unten) angesteuert ist.

Statt eines solchen Verdrehens der Sub-Matrizen SM um MFM herum, und in den Sub-Matrizen SM ihrer Zeichenfelder ZF um MFS herum, kann auch, wie oben schon angesprochen, erfindungsgemäß vorgesehen sein, aufgrund Betätigung der Turn-Taste TT die Auswahlwirkung der Vierrichtungs-Eingabe um 45° zu verschwenken, und das nun vorzugsweise gegen den Uhrzeigersinn - also linksdrehend. Das bedeutet, dass von einem Mittelfeld MF ausgehend der Druck auf den Vierrichtungs-Schalter VS beispielsweise nach oben nicht die in der Main-Matrix MM darüber gelegene Sub-Matrix SM bzw. nicht das in der Sub-Matrix SM darüber gelegene Zeichenfeld ZF anwählt, sondern das entgegen dem Uhrzeigersinn benachbarte Element der Sub-Matrix SM bzw. des Zeichenfeldes ZF - ganz so, als wären diese selbst wie zuvor beschrieben mittels der Turn-Taste TT (vgl. den Übergang von Fig. 1 nach Fig. 2 der Zeichnung bei den Sub-Matrizen SM) um 45° in die nächste rechts benachbarte Orthogonalenrichtung des Vierrichtungs-Schalters VS verdreht worden.

Um also beispielsweise eines der Zeichen in der in Fig.1 unten rechts markierten Sub-Matrix SM* innerhalb der Main-Matrix MM anzusteuern, ohne den erwähnten Umweg über zwei zueinander orthogonale Betätigungen des Vierrichtungs-Schalters VS einschlagen zu müssen, wird in der Ausgangsformation, noch vor erstmaliger Betätigung des Vierrichtungs-Schalters VS, die Turn-Taste TT gedrückt und wieder losgelassen. Das hat in diesem Realisierungsbeispiel zur Folge, dass (vgl. den Übergang von Fig. 1 nach Fig. 2) alle Sub-Matrizen SM, unter Beibehalten der Ausgangsformation ihrer jeweiligen Zeichenfelder ZF relativ zueinander, innerhalb der Main-Matrix MM um einen 45°-Schritt im Uhrzeigersinn (nach rechts) verdreht werden. Dadurch wird das Mittelfeld MFS* der Sub-Matrix SM* dann von der Ausgangsposition des Main-Mittelfeldes MFM aus durch einmalige Belastung des Vierrichtungs-Schalters VS nach unten erreichbar (Fig. 2).

Um danach von diesem Sub-Mittelfeld MFS* aus beispielsweise das Zeichen "Z" anzusteuern, wird der Vierrichtungs-Schalter VS nach rechts gedrückt. Mit Entlasten des Vierrichtungs-Schalters VS, also mit Rückkehr in die Ruhestellung des Main-Mittelfeldes MFM, wird das so angewählte Zeichen "Z" ausgegeben und zugleich die Verdrehung der Sub-Matrizen SM um MFM herum wieder rückgängig gemacht.

Um aber von dem zuvor angewählten Mittelfeld MFS* aus dann das Zeichen "J" zu erreichen, muss dessen Zeichenfeld ZF* zunächst noch in die Orthogonale seiner Sub-Matrix SM* verdreht werden. Dafür wird nach der Anwahl des Mittelfeldes MFS* von MFM her abermals eine Turn-Taste TT (vorzugsweise dieselbe) kurz betätigt, womit nun die Zeichenfelder ZF innerhalb der angewählten Sub-Matrix SM* um eine 45°-Position nach rechts verdreht werden. Damit ist (vgl. den Übergang von Fig. 2 nach Fig. 3) in dieser Sub-Matrix SM* das Zeichenfeld ZF* mit dem Zeichen "J" für den Vierrichtungs-Schalter VS vom Sub-Mittelfeld MFS* aus nach unten erreichbar. Mit Ausgabe dieses Zeichens wird auch diese Verdrehung (der Positionen der Zeichenfelder ZF* in der Sub-Matrix SM*) wieder rückgängig gemacht (Rückkehr in die Ausgangsformation gemäß Fig. 1).

Es ist außerdem vorgesehen, fortlaufend auf einem Display DY anzuzeigen, welche Zeichenfelder ZF in ihren Sub-Matrizen SM momentan mittels des Vierrichtungs-Schalters VS vom Sub-Mittelfeld MFS her angewählt werden können. Beim in der Zeichnung skizzierten, weiterbildenden Realisierungsbeispiel werden dafür statt der platzaufwendigen 9x9-Matrixdarstellung der Main-Matrix MM nur drei Zeilen benötigt. Auf denen wird entsprechend gegeneinander versetzt angegeben, welche Sub-Matrizen SM vom Main-Mittelfeld MFM aus mittels der Vierrichtungs-Eingabe zur Vorauswahl erreichbar sind; und welche Zeichenfelder ZF darin gerade mittels des Vierrichtungs-Schalters anwählbar sind. Eine momentan vorausgewählte Sub-Matrix SM* wird zweckmäßigerweise dadurch angezeigt, dass deren erreichbaren Zeichenfelder ZF in einem visuell, etwa farblich, hervorgehobenen Fenster dargestellt werden.

Außer diesen auf den Orthogonalen gelegenen und deshalb direkt anwählbaren Zeichen in den erreichbaren Sub-Matrizen SM sind in der Zeichnung als zusätzliche Weiterbildung nach rechts versetzt noch die Zeichen aufgeführt, die in der jeweiligen Sub-Matrix SM auf den Winkelhalbierenden dazwischen liegen und die deshalb erst angewählt werden können, nachdem - nach Anspringen des Sub-Mittelfeldes MFS - die Turn-Taste TT betätigt wurde.

Die Übergabe von Zeichen erfolgt also erfindungsgemäß mittels Auswahl aus einer Matrix-Darstellung eines Vorrats an Zeichen, der auf die acht Zeichenfelder ZF von 3x3-Sub-Matrizen SM jeweils um ihr zeichenneutrales Mittelfeld MFS herum verteilt ist, wobei acht Sub-Matrizen SM in einer 3x3-Main-Matrix MM um deren zeichenneutrales Mittelfeld MFM herum angeordnet sind, durch Betätigen eines richtungsselektiv ansprechenden Vierrichtungs-Auswahlschalters VS zum Ansteuern des Mittelfeldes MFS einer Sub-Matrix SM und von dort aus mittels der gleichen Eingabebewegung zum Ansteuern eines Zeichenfeldes ZF in dieser Sub-Matrix SM. Da mittels eines solchen Vierrichtungs-Schalters VS keine Anwahl in Diagonalenrichtung möglich ist, erfolgt die Auswahl eines Zeichens aus einer Sub-Matrix SM, die in ihrer Ausgangsformation in einer Ecke der Main-Matrix MM gelegen ist, mittels einer zunächst zu betätigenden Turn-Taste TT, was ein Verdrehen aller Sub-Matrizen SM um 45° um das Main-Mittelfeld MFM herum auslöst bzw. ein Verschwenken der Vierrichtungseingabe um 45° gegensinnig dazu zur Folge hat. Für die Auswahl des Zeichens auf seinem Zeichenfeld ZF, das in einer Ecke einer gerade angesteuerten Sub-Matrix SM* angeordnet ist, wird ebenfalls die Turn-Taste TT betätigt, um ein Verdrehen der Lage der Zeichenfelder ZF* innerhalb dieser Sub-Matrix SM* um 45° um ihr gerade vom Main-Mittelfeld MFM her angewähltes Sub-Mittelfeld MFS* herum auszulösen bzw. um wiederum die Auswahlfunktion des Schalters um 45° gegensinnig dazu zu verschwenken. Als Turn-Taste TT kann beispielsweise eine beliebige Taste in der Tastatur eines Mobiltelefons belegt sein, bei dem etwa ein SMS-Text nun mittels dessen Joystick anstelle über die Tastatur eingegeben werden kann.

Die Software für das Erfassen der beschriebenen Auswahl-Bewegungsfolge vom zentralen Ausgangspunkt MFM zu einem Sub-Mittelfeld MFM* und im nächsten Schritt von dort zu einem Zeichenfeld ZF* unter Berücksichtigung einer eventuellen Auswahl-Verdrehung hat sich als derart wenig umfangreich erwiesen, dass sie sich problemlos zu den kommerziellen Standardprogrammen einer Tastatur mit separatem oder integriertem Richtungs-Schalter für z.B. Computereingaben oder Telefonbedienungen adaptieren lässt.

## Patentansprüche

1. Verfahren zum Eingeben von Zeichen, bei welchem ein in einer Matrix darstellbarrer Vorrat an Zeichen, der auf Zeichenfelder (ZF) von 3x3 Sub-Matrizen (SM) jeweils um ihr zeichenneutrales Mittelfeld (MFS) herum verteilt ist, wobei die Sub-Matrizen (SM) ihrerseits in einer 3x3 Main-Matrix (MM) um deren zeichenneutrales Mittelfeld (MFM) herum angeordnet sind und die seltener benötigten Zeichen in den Sub-Matrizen auf den Diagonalen der 3×3 Main-Matrix liegen, von einer Zeicheneingabevorrichtung bereitgestellt wird und ein Benutzer ein Zeichen aus diesem Zeichenvorrat auswählt,
**dadurch gekennzeichnet, dass**
zur Auswahl eines Zeichens aus einer Sub-Matrix (SM), die in der Matrix des Zeichenvorrats auf einer Vertikalen oder Horizontalen der Main-Matrix (MM) angeordnet ist, ein Vierrichtungs-Schalter (VS) ausgehend von dem Mittelfeld (MFM) der Main-Matrix (MM) in Richtung der gewünschten Sub-Matrix (SM) betätigt wird, um die gewünschte Sub-Matrix (SM) anzuwählen;
zur Auswahl eines Zeichens aus einer Sub-Matrix (SM), die in der Matrix des Zeichenvorrats auf einer Diagonalen der Main-Matrix (MM) angeordnet ist, zunächst eine Umschalttaste (TT) betätigt wird, um eine Auswahlwirkung des Vierrichtungs-Schalters (VS) um 45° gegen den Uhrzeigersinn oder im Uhrzeigersinn um das Mittelfeld (MFM) der Main-Matrix (MM) zu verschwenken, und dann der Vierrichtungs-Schalter (VS) ausgehend von dem Mittelfeld (MFM) der Main-Matrix (MM) in Richtung der gewünschten Sub-Matrix (SM) betätigt wird, um die gewünschte Sub-Matrix (SM) anzuwählen;
zur Auswahl eines Zeichens aus einer angewählten Sub-Matrix (SM), das in der Matrix des Zeichenvorrats auf einer Vertikalen oder Horizontalen der angewählten Sub-Matrix (SM) angeordnet ist, der Vierrichtungs-Schalter (VS) ausgehend von dem Mittelfeld (MFS) der angewählten Sub-Matrix (SM) in Richtung des gewünschten Zeichenfeldes (ZF) betätigt wird, um das gewünschte Zeichenfeld (ZF) anzuwählen;
zur Auswahl eines Zeichens aus einer angewählten Sub-Matrix (SM), das in der Matrix des Zeichenvorrats auf einer Diagonalen der angewählten Sub-Matrix (SM) angeordnet ist, zunächst die Umschalttaste (TT) betätigt wird, um eine Auswahlwirkung des Vierrichtungs-Schalters (VS) um 45° gegen den Uhrzeigersinn oder im Uhrzeigersinn um das Mittelfeld (MFS) der Sub-Matrix (SM) zu verschwenken, und dann der Vierrichtungs-Schalter (VS) ausgehend von dem Mittelfeld (MFS) der angewählten Sub-Matrix (SM) in Richtung des gewünschten Zeichenfeldes (ZF) betätigt wird, um das gewünschte Zeichenfeld (ZF) anzuwählen; und
auf einem Display (DY) jeweils die aktuell mittels des Vierrichtungs-Schalters (VS) anwählbaren Sub-Matrizen (SM) bzw. Zeichenfelder (ZF) der angewählten Sub-Matrix (SM) angezeigt werden.

2. Verfahren nach Anspruch 1,
**dadurch gekennzeichnet, dass**
die aktuell mittels des Vierrichtungs-Schalters (VS) anwählbaren Sub-Matrizen (SM) bzw. Zeichenfelder (ZF) der angewählten Sub-Matrix (SM) auf dem Display (DY) in einer dreizeiligen Darstellung angezeigt werden.

3. Verfahren nach Anspruch 1 oder 2,
**dadurch gekennzeichnet, dass**
eine aktuell angewählte Sub-Matrix (SM) bzw. die aktuell mittels des Vierrichtungs-Schalters (VS) anwählbaren Zeichenfelder (ZF) der Sub-Matrix (SM) optisch hervorgehoben werden.

4. Verfahren nach einem der vorherigen Ansprüche,
**dadurch gekennzeichnet, dass**
auf dem Display (DY) Zeichenfelder (ZF) von insgesamt vier Sub-Matrizen (SM) angezeigt werden, wobei die Zeichenfelder (ZF) entsprechend den Sub-Matrizen (SM) gruppiert und entsprechend der Anwählbarkeit mittels des Vierrichtungs-Schalters (VS) auf dem Display (DY) verteilt dargestellt werden.

5. Verfahren nach einem der vorherigen Ansprüche,
**dadurch gekennzeichnet, dass**
auf dem Display (DY) jeweils die aktuell anwählbaren Zeichenfelder (ZF) einer Sub-Matrix (SM) in einer Zeile dargestellt werden.

6. Verfahren nach Anspruch 5,
**dadurch gekennzeichnet, dass**
auf dem Display (DY) neben den aktuell anwählbaren Zeichenfeldern (ZF) einer Sub-Matrix (SM) jeweils auch die nach Betätigung der Umschalttaste (TT) anwählbaren Zeichenfelder (ZF) der Sub-Matrix (SM) in der Zeile dargestellt werden.

7. Verfahren nach einem der vorherigen Ansprüche,
**dadurch gekennzeichnet, dass**
mit Beendigung der Betätigung des Vierrichtungs-Schalters (VS) und Rücksprung der Anwahl in das Startfeld in Form des Mittelfeldes (MFM) der Main-Matrix (MM) ein Rückführen der Auswahlwirkung des Vierrichtungs-Schalters (VS) erfolgt.

8. Vorrichtung zum Eingeben von Zeichen durch einen Benutzer, mit einem bereitgestellten in einer Matrix darstellbaren Vorrat an Zeichen, der auf Zeichenfelder (ZF) von 3×3 Sub-Matrizen (SM) jeweils um ihr zeichenneutrales Mittelfeld (MFS) herum verteilt ist, wobei die Sub-Matrizen (SM) ihrerseits in einer 3x3 Main-Matrix (MM) um deren zeichenneutrales Mittelfeld (MFM) herum angeordnet sind und die seltener benötigten Zeichen in den Sub-Matrizen auf den Diagonalen der 3×3 Main-Matrix liegen, und einem richtungsselektiv betätigbaren Auswahlschalter (VS) zum Anwählen einer Sub-Matrix (SM) aus der Main-Matrix (MM) und Anwählen eines Zeichenfeldes (ZF) aus der angewählten Sub-Matrix (SM),
**dadurch gekennzeichnet, dass**
der Auswahlschalter (VS) ein Vierrichtungs-Schalter ist, mit dem eine Sub-Matrix (SM) auf einer Vertikalen oder Horizontalen der Main-Matrix (MM) bzw. ein Zeichenfeld (ZF) auf einer Vertikalen oder Horizontalen einer angewählten Sub-Matrix (SM) angewählt werden kann;
eine Umschalttaste (TT) vorgesehen ist, mit der ein Verschwenken der Auswahlwirkung des Vierrichtungs-Schalters (VS) um 45° gegen den Uhrzeigersinn oder im Uhrzeigersinn um das Mittelfeld (MFM) der Main-Matrix (MM) bzw. um das Mittelfeld (MFS) der Sub-Matrix (SM) ausgelöst werden kann; und
ein Display (DY) vorgesehen ist, auf dem jeweils die aktuell mittels des Vierrichtungs-Schalters (VS) anwählbaren Sub-Matrizen (SM) bzw. Zeichenfelder (ZF) der angewählten Sub-Matrix (SM) angezeigt werden.

9. Vorrichtung nach Anspruch 8,
**dadurch gekennzeichnet, dass**
das Display (DY) ein Display mit einer dreizeiligen Darstellung ist.

10. Vorrichtung nach Anspruch 8 oder 9,
**dadurch gekennzeichnet, dass**
auf dem Display (DY) Zeichenfelder (ZF) von insgesamt vier Sub-Matrizen (SM)
angezeigt werden, wobei die Zeichenfelder (ZF) entsprechend den Sub-Matrizen (SM) gruppiert und entsprechend der Anwählbarkeit mittels des Vierrichtungs-Schalters (VS) auf dem Display (DY) verteilt dargestellt werden.

11. Vorrichtung nach einem der Ansprüche 8 bis 10,
**dadurch gekennzeichnet, dass**
auf dem Display (DY) jeweils die aktuell anwählbaren Zeichenfelder (ZF) einer Sub-Matrix (SM) hintereinander in einer Zeile dargestellt werden.

12. Vorrichtung nach Anspruch 11,
**dadurch gekennzeichnet, dass**
auf dem Display (DY) neben den aktuell anwählbaren Zeichenfeldern (ZF) einer Sub-Matrix (SM) jeweils auch die nach Betätigung der Umschalttaste (TT) anwählbaren Zeichenfelder (ZF) der Sub-Matrix (SM) hintereinander in der Zeile dargestellt werden.

13. Vorrichtung nach einem der Ansprüche 8 bis 12,
**dadurch gekennzeichnet, dass**
der Vierrichtungs-Schalter (VS) durch die Optik eines Fotohandys gebildet ist.

14. Vorrichtung nach einem der Ansprüche 8 bis 12,
**dadurch gekennzeichnet, dass**
der Vierrichtungs-Schalter (VS) eine Cursortasten-Anordnung, ein Wipptaster, eine Rollkugel, eine Maus, ein Joystick oder ein Schwenknippel, bevorzugt in der Nachbarschaft der Tastatur eines Mobiltelefons, eines Navigationsgeräts, oder eines Handheld-Computers ist.

15. Vorrichtung nach einem der Ansprüche 8 bis 14,
**dadurch gekennzeichnet, dass**
mit der Funktion der Umschalttaste (TT) wenigstens eine beliebige der Tasten einer Tastatur belegt ist, die nicht der Vierrichtungs-Schalter (VS) ist.

16. Vorrichtung nach Anspruch 15,
**dadurch gekennzeichnet, dass**
mit der Funktion der Umschalttaste (TT) die Shift-Taste der jeweiligen Tastatur belegt ist.

## Claims

1. Method for inputting characters, in which a character set which can be presented in a matrix is provided from a character input apparatus, which character set is distributed on character fields (ZF) of 3×3 sub-matrices (SM) around their respective character-neutral midfields (MFS), wherein the sub-matrices (SM) for their part are arranged in a 3×3 main matrix (MM) around its character-neutral midfield (MFM) and the less frequently required characters are located in the sub-matrices on the diagonals of the 3×3 main matrix, and in which a user selects a character from this character set,
**characterized in that**
to select a character from a sub-matrix (SM), which is located in the matrix of the character set on a vertical or horizontal of the main matrix (MM), a four-directions switch (VS) is operated starting from the midfield (MFM) of the main matrix (MM) in the direction of the desired sub-matrix (SM) to select the desired sub-matrix (SM); to select a character from a sub-matrix (SM), which is located in the matrix of the character set on a diagonal of the main matrix (MM), first a shifting key (TT) is operated to pivot a selecting effect of the four-directions switch (VS) at 45° counterclockwise or clockwise around the midfield (MFM) of the main matrix (MM), and then the four-directions switch (VS) is operated starting from the midfield (MFM) of the main matrix (MM) in the direction of the desired sub-matrix (SM) to select the desired sub-matrix (SM);
to select a character from a selected sub-matrix (SM), which is located in the matrix of the character set on a vertical or horizontal of the selected sub-matrix (SM), the four-directions switch (VS) is operated starting from the midfield (MFS) of the selected sub-matrix (SM) in the direction of the desired character field (ZF) to select the desired character field (ZF);
to select a character from a selected sub-matrix (SM), which is located in the matrix of the character set on a diagonal of the selected sub-matrix (SM), first the shifting key (TT) is operated to pivot a selecting effect of the four-directions switch (VS) at 45° counterclockwise or clockwise around the midfield (MFS) of the sub-matrix (SM), and then the four-directions switch (VS) is operated starting from the midfield (MFS) of the selected sub-matrix (SM) in the direction of the desired character field (ZF) to select the desired character field (ZF); and
the sub-matrices (SM) or the character fields (ZF) of the selected sub-matrix (SM) which are currently selectable using the four-directions switch (VS) are displayed on a display (DY).

2. Method according to claim 1,
**characterized in that**
the sub-matrices (SM) or the character fields (ZF) of the selected sub-matrix (SM) which are currently selectable using the four-directions switch (VS) are displayed on the display (DY) by a presentation of three lines.

3. Method according to claim 1 or 2,
**characterized in that**
a currently selected sub-matrix (SM) or the character fields (ZF) of the sub-matrix (SM) which are currently selectable using the four-directions switch (VS) are visually highlighted.

4. Method according to any one of the preceding claims,
**characterized in that**
character fields (ZF) of a total of four sub-matrices (SM) are displayed on the display (DY) wherein the character fields (ZF) are presented in groups according to the sub-matrices (SM) and in a distribution according to the selectability on the display (DY) using the four-directions switch (VS).

5. Method according to any one of the preceding claims,
**characterized in that**
the currently selectable character fields (ZF) of a sub-matrix (SM) are displayed on the display (DY) in one line.

6. Method according to claim 5,
**characterized in that**
in addition to the currently selectable character fields (ZF) a sub-matrix (SM), also the character fields (ZF) of sub-matrix (SM) which are selectable after operating the shifting key (TT) are displayed on the display (DY) in the line.

7. Method according to any one of the preceding claims,
**characterized in that**
with the completion of the operation of the four-directions switch (VS) and the return of the selection to the starting field in the form of the midfield (MFM) of the main matrix (MM), restoring the selecting effect of the four-directions switch (VS) is carried out.

8. Apparatus for inputting characters by a user, comprising a provided character set which can be presented in a matrix, which character set is distributed on character fields (ZF) of 3×3 sub-matrices (SM) around their respective character-neutral midfields (MFS), wherein the sub-matrices (SM) for their part are arranged in a 3×3 main matrix (MM) around its character-neutral midfield (MFM) and the less frequently required characters are located in the sub-matrices on the diagonals of the 3×3 main matrix, and a direction-selectively operable selecting switch (VS) for selecting a a sub-matrix (SM) from the main matrix (MM) and selecting a character field from the selected sub-matrix (SM),
**characterized in that**
the selecting switch (VS) is a four-directions switch by which a sub-matrix (SM) on a vertical or horizontal of the main matrix (MM) or a character field (ZF) on a vertical or horizontal of a selected sub-matrix (SM) can be selected;
a shifting key (TT) is provided by which pivoting of the selecting effect of the four-directions switch (VS) at 45° counterclockwise or clockwise around the midfield (MFM) of the main matrix (MM) or around the midfield (MFS) of the sub-matrix (SM) can be caused; and
a display (DY) is provided on which the sub-matrices (SM) or the character fields (ZF) of the selected sub-matrix (SM) which are currently selectable using the four-directions switch (VS) are displayed.

9. Apparatus according to claim 8,
**characterized in that**
the display (DY) is a display having a presentation of three lines.

10. Apparatus according to claim 8 or 9,
**characterized in that**
character fields (ZF) of a total of four sub-matrices (SM) are displayed on the display (DY) wherein the character fields (ZF) are presented in groups according to the sub-matrices (SM) and in a distribution according to the selectability on the display (DY) using the four-directions switch (VS).

11. Apparatus according to any one of claims 8 to 10,
**characterized in that**
the currently selectable character fields (ZF) of a sub-matrix (SM) are presented on the display (DY) one behind the other in one line.

12. Apparatus according to claim 11,
**characterized in that**
in addition to the currently selectable character fields (ZF) of a sub-matrix (SM), also the character fields (ZF) of the sub-matrix (SM) which are selectable after operating the shifting key (TT) are presented on the display (DY) one behind the other in the line.

13. Apparatus according to any one of claims of 8 to 12,
**characterized in that**
the four-directions switch (VS) is provided by the optics of a camera phone.

14. Apparatus according to any one of claims of 8 to 12,
**characterized in that**
the four-directions switch (VS) is a layout of cursor keys, a rocker switch, a trackball, a mouse, a joystick or a swivel nipple, preferably nearby the keypad of a mobile phone, a navigation device or a handheld computer.

15. Apparatus according to any one of claims 8 to 14,
**characterized in that**
the function of the shifting key (TT) is put on at least one arbitrary key of a keypad which is not the four-directions switch (VS).

16. Apparatus according to claim 15,
**characterized in that**
the function of the shifting key (TT) is put on the shift key of the respective keypad.

## Revendications

1. Procédé destiné à saisir des caractères, selon lequel une réserve de caractères, pouvant être représentée dans une matrice et répartie sur des champs de caractères (ZF) de 3x3 sous-matrices (SM) respectivement autour de leur champ central de caractère neutre (MFS), les sous-matrices (SM) étant disposées pour leur part dans une matrice principale 3x3 (MM) autour de leur champ central de caractère neutre (MFM) et les caractères rarement nécessaires dans les sous-matrices se situant sur les diagonales de la matrice principale 3x3, est fournie par un dispositif de saisie de caractères, et un utilisateur sélectionne un caractère à partir de cette réserve de caractères,
**caractérisé en ce que**
pour sélectionner un caractère à partir d'une sous-matrice (SM) disposée dans la matrice de la réserve de caractères sur une verticale ou horizontale de la matrice principale (MM), un commutateur quadridirectionnel (VS) est actionné en partant du champ central (MFM) de la matrice principale (MM) en direction de la sous-matrice (SM) souhaitée afin de sélectionner la sous-matrice (SM) souhaitée ;
pour sélectionner un caractère à partir d'une sous-matrice (SM) disposée dans la matrice de la réserve de caractères sur une diagonale de la matrice principale (MM), une touche de commutation (TT) est tout d'abord actionnée afin de faire pivoter une action de sélection du commutateur quadridirectionnel (VS) de 45° dans le sens antihoraire ou dans le sens horaire autour du champ central (MFM) de la matrice principale (MM), puis le commutateur quadridirectionnel (VS) est actionné en partant du champ central (MFM) de la matrice principale (MM) en direction de la sous-matrice (SM) souhaitée, afin de sélectionner le champ de caractères (ZF) souhaité ;
pour sélectionner un caractère à partir d'une sous-matrice (SM) sélectionnée, ledit caractère étant disposé dans la matrice de la réserve de caractères sur une verticale ou horizontale de la sous-matrice (SM) sélectionnée, le commutateur quadridirectionnel (TT) est tout d'abord actionné en partant du champ central (MFS) de la sous-matrice (SM) sélectionnée en direction du champ de caractères (ZF) souhaité, afin de sélectionner le champ de caractères (ZF) souhaité ; et
pour sélectionner un caractère à partir d'une sous-matrice (SM) sélectionnée, ledit caractère étant disposé dans la matrice de la réserve de caractères sur une diagonale de la sous-matrice (SM) sélectionnée, la touche de commutation (TT) est tout d'abord actionnée afin de faire pivoter une action de sélection du commutateur quadridirectionnel (VS) de 45° dans le sens antihoraire ou dans le sens horaire autour du champ central (MFS) de la sous-matrice (SM), puis le commutateur quadridirectionnel (VS) est actionné en partant du champ central (MFS) de la sous-matrice (SM) sélectionnée en direction du champ de caractères (ZF) souhaité, afin de sélectionner le champ de caractères (ZF) souhaité ; et
respectivement les sous-matrices (SM) ou les champs de caractères (ZF) de la sous-matrice (SM) sélectionnée pouvant être sélectionnés actuellement au moyen du commutateur quadridirectionnel (VS) sont affichés sur un écran (DY).

2. Procédé selon la revendication 1,
**caractérisé en ce que** les sous-matrices (SM) pouvant être actuellement sélectionnés au moyen du commutateur quadridirectionnel (VS) ou les champs de caractères (ZF) de la sous-matrice (SM) sélectionnée sont affichés sur l'écran (DY) dans une représentation sur trois lignes.

3. Procédé selon la revendication 1 ou 2,
**caractérisé en ce que**
une sous-matrice (SM) actuellement sélectionnée ou les champs de caractères (ZF) de la sous-matrice (SM), pouvant être actuellement sélectionnés au moyen du commutateur quadridirectionnel (VS) sont affichés optiquement en surbrillance.

4. Procédé selon l'une quelconque des revendications précédentes,
**caractérisé en ce que**
des champs de caractères (ZF) de quatre sous-matrices (SM) au total sont affichés sur l'écran (DY), les champs de caractères (ZF) étant groupés en fonction des sous-matrices (SM) et représentés en étant répartis sur l'écran (DY) en fonction de la possibilité de sélection au moyen du commutateur quadridirectionnel (VS).

5. Procédé selon l'une quelconque des revendications précédentes,
**caractérisé en ce que**
respectivement les champs de caractères (ZF) pouvant être actuellement sélectionnés d'une sous-matrice (SM) sont représentés dans une ligne sur l'écran (DY).

6. Procédé selon la revendication 5,
**caractérisé en ce que**
en plus des champs de caractères (ZF) pouvant être actuellement sélectionnés d'une sous-matrice (SM), respectivement également les champs de caractères (ZF) de la sous-matrice (SM), pouvant être sélectionnés après l'actionnement de la touche de commutation (TT), sont représentés dans la ligne sur l'écran (DY).

7. Procédé selon l'une quelconque des revendications précédentes,
**caractérisé en ce que**
une fois l'actionnement du commutateur quadridirectionnel (VS) et le retour de la sélection dans le champ de départ sous forme du champ central (MFM) de la matrice principale (MM) terminés, un retour de l'action de sélection du commutateur quadridirectionnel (VS) s'effectue.

8. Dispositif de saisie de caractères par un utilisateur, comprenant une réserve de caractères fournie pouvant être représentée dans une matrice et répartie sur des champs de caractères (ZF) de 3x3 sous-matrices (SM) respectivement autour de leur champ central de caractère neutre (MFS), les sous-matrices (SM) étant disposées pour leur part dans une matrice principale 3x3 (MM) autour de leur champ central de caractère neutre (MFM) et les caractères rarement nécessaires dans les sous-matrices se situant sur les diagonales de la matrice principale 3x3, et comprenant un commutateur de sélection (VS) pouvant être actionné par sélection d'une direction pour sélectionner une sous-matrice (SM) à partir de la matrice principale (MM) et sélectionner un champ de caractères (ZF) à partir de la sous-matrice (SM) sélectionnée,
**caractérisé en ce que**
le commutateur de sélection (VS) est un commutateur quadridirectionnel permettant de sélectionner une sous-matrice (SM) sur une verticale ou une horizontale de la matrice principale (MM) ou un champ de caractères (ZF) sur une verticale ou une horizontale d'une sous-matrice (SM) sélectionnée ;
une touche de commutation (TT) permet de déclencher un pivotement de l'action de sélection du commutateur quadridirectionnel (VS) de 45° dans le sens antihoraire ou dans le sens horaire autour du champ central (MFM) de la matrice principale (MM) ou autour du champ central (MFS) de la sous-matrice (SM) ; et
un écran (DY) est prévu, sur lequel respectivement les sous-matrices (SM) pouvant être actuellement sélectionnées au moyen du commutateur quadridirectionnel (VS) ou les champs de caractères (ZF) de la sous-matrice (SM) sélectionnée sont affichés.

9. Dispositif selon la revendication 8,
**caractérisé en ce que**
l'écran (DY) est un écran à représentation sur trois lignes.

10. Dispositif selon la revendication 8 ou 9,
**caractérisé en ce que**
des champs de caractères (ZF) de quatre sous-matrices (SM) au total sont affichés sur l'écran (DY), les champs de caractères (ZF) étant groupés en fonction des sous-matrices (SM) et représentés en étant répartis sur l'écran (DY) en fonction de la possibilité de sélection au moyen du commutateur quadridirectionnel (VS).

11. Dispositif selon l'une quelconque des revendications 8 à 10,
**caractérisé en ce que**
respectivement les champs de caractères (ZF) pouvant être actuellement sélectionnés d'une sous-matrice (SM) sont représentés les uns derrière les autres dans une ligne sur l'écran (DY).

12. Dispositif selon la revendication 11,
**caractérisé en ce que**
respectivement également les champs de caractères (ZF) de la sous-matrice (SM) pouvant être sélectionnés après l'actionnement de la touche de commutation (TT), en plus des champs de caractères (ZF) pouvant être actuellement représentés d'une sous-matrice (SM), sont représentés les uns derrière les autres dans la ligne sur l'écran (DY).

13. Dispositif selon l'une quelconque des revendications 8 à 12,
**caractérisé en ce que**
le commutateur quadridirectionnel (VS) est formé par l'optique d'un téléphone portable-photo.

14. Dispositif selon l'une quelconque des revendications 8 à 12,
**caractérisé en ce que**
le commutateur quadridirectionnel (VS) est un ensemble touche fléchée, un interrupteur à bascule, une boule de pointage, une souris, une manette ou un raccord pivotant, de préférence au voisinage du clavier d'un téléphone mobile, d'un appareil de navigation ou d'un ordinateur portable.

15. Dispositif selon l'une quelconque des revendications 8 à 14,
**caractérisé en ce que**
au moins une touche quelconque d'un clavier, qui n'est pas le commutateur quadridirectionnel (VS), occupe la fonction de la touche de commutation (TT).

16. Dispositif selon la revendication 15,
**caractérisé en ce que**
la touche shift du clavier respectif occupe la fonction de la touche de commutation (TT).
